# EUROPÄISCHE PATENTSCHRIFT

(11) **EP 2 990 631 B1**
(45) Veröffentlichungstag und Bekanntmachung des Hinweises auf die Patenterteilung: **18.12.2024**
(21) Anmeldenummer: 15001319.1
(22) Anmeldetag: 04.05.2015
(51) Int. Cl.: F02D 41/00, F02D 19/06, F02D 19/08, F02D 41/14, F02M 21/02, F02D 19/02, F02D 35/02

(54) **VERBRENNUNGSMOTOR UND VERFAHREN ZUM BETRIEB DESSELBEN**
COMBUSTION ENGINE AND METHOD FOR OPERATING THE SAME
MOTEUR À COMBUSTION INTERNE ET SON PROCÉDÉ DE FONCTIONNEMENT

(30) Priorität: 09.05.2014 AT 3452014
(43) Veröffentlichungstag der Anmeldung: 02.03.2016
(73) Patentinhaber: Innio Jenbacher GmbH & Co OG, 6200 Jenbach (AT)
(72) Erfinder: Arnold, Georg, 6020 Innsbruck (AT); Amplatz, Erwin, 6220 Buch in Tirol (AT); Kopecek, Herbert, 6130 Schwaz (AT); Schaumberger, Herbert, 6232 Münster (AT); Spyra, Nikolaus, 6020 Innsbruck (AT)
(74) Vertreter: Torggler & Hofmann Patentanwälte - Innsbruck

(56) Entgegenhaltungen:
- EP-A1- 2 002 101
- EP-A1- 2 784 291
- EP-B1- 2 002 101
- WO-A1-2013/076811
- WO-A1-2014/040606
- DE-A1- 1 576 321

## Beschreibung

Die vorliegende Erfindung betrifft einen Verbrennungsmotor gemäß den Merkmalen des Oberbegriffs des Anspruchs 1 sowie ein Verfahren zum Betrieb eines Verbrennungsmotors gemäß den Merkmalen des Oberbegriffs des Anspruchs 3.

Die WO 2014/040606 A1 und die WO 2013/076811 A1 offenbaren jeweils Brennkraftmaschinen mit einer Abgasrückführung.

Aus der EP 2 002 101 A1 ist eine Brennkraftmaschine bekannt, welche mit zwei verschiedenen gasförmigen Kraftstoffen betrieben werden kann, wobei das Mischungsverhältnis der beiden Kraftstoffe in Abhängigkeit einer Motorgröße eingestellt wird.

Es gibt eine Reihe von Anwendungen von Verbrennungsmotoren, wobei diese mit einem Treibstoff betrieben werden, welcher einen relativ niedrigen Heizwert und darüber hinaus einen teilweise stark variierenden Heizwert aufweist. Als konkretes Beispiel sei ein Gasmotor genannt, der mit einem sogenannten Low-BTU-Gas betrieben wird, welches beispielsweise aus einer Kohlemine stammt. Da dieses Low-BTU-Gas (BTU: British Thermal Unit) nicht nur einen niedrigen Heizwert, sondern auch einen stark variierenden Heizwert aufweist, ist es Stand der Technik, dem Brenngas ein Stabilisierungsgas beizumischen, welches auch dann die Verbrennung sicherstellt, wenn das Brenngas zeitweilig einen sehr niedrigen Heizwert aufweist. Dies ist beispielsweise in der Baureihe 6, Model 620 E51 der Anmelderin realisiert.

Die Beimischung erfolgt dabei so, dass diese Bedingung der Sicherstellung der Verbrennung gerade noch erfüllt ist. Der sparsame Umgang mit Stabilisierungsgas ist dabei geboten, da dieses zugekauft werden muss und aufgrund seiner besseren Brennbarkeit meist teurer als das Brenngas ist.

Als Stabilisierungsgase kommen hierbei vorzugsweise wasserstoffhaltige und/oder methanhaltige Gase zum Einsatz, beispielsweise reiner Wasserstoff oder reines Methan sowie Erdgas, oder Koksgas. Prinzipiell ist es möglich, jegliches Gas, welches den Dauerbetrieb eines Verbrennungsmotors ermöglicht, als Stabilisierungsgas zu verwenden.

Aus dem oben beschriebenen Bestreben, so wenig wie möglich Stabilisierungsgas zu verwenden, ist eine weitere Entwicklung hervorgegangen. Es ist bekannt, die Zusammensetzung des Brenngases vor der Zufuhr zum Verbrennungsmotor kontinuierlich zu messen und daraus den gerade vorliegenden Heizwert zu bestimmen. Auf diese Weise kann gezielt mehr Stabilisierungsgas zugeführt werden, wenn das Brenngas gerade einen besonders geringen Heizwert aufweist. Nachteilig dabei ist, dass die zur Analyse des Brenngases notwenigen Messgeräte, beispielsweise Gaschromatographen oder Massenspektrometer, recht aufwendiger Natur sind. Diese Analysemethoden sind relativ träge, wodurch eine anforderungsgenaue Beimischung von Stabilisierungsgas bei schnell wechselnden Heizwerten des Brenngases nicht möglich ist. Sie sind zudem teuer und es besteht ein erhöhtes Risiko des Ausfalls, wodurch wieder zu der eingangs beschriebenen Methode einer konstanten Beimischung von Stabilisierungsgas zurückgekehrt werden muss.

Aufgabe der Erfindung ist es, einen Verbrennungsmotor sowie ein Verfahren zum Betrieb eines Verbrennungsmotors bereitzustellen, wobei ein sicherer Betrieb bei der Verbrennung von Brenngas mit variablem und/oder zu niedrigem Heizwert sowie ein effizienter Einsatz von Stabilisierungsgas ermöglicht werden.

Diese Aufgabe wird durch einen Verbrennungsmotor mit den Merkmalen des Anspruchs 1 sowie durch ein Verfahren mit den Merkmalen des Anspruchs 3 gelöst.

Dies geschieht indem eine Menge des der wenigstens einen Brennkammer zugeführten Stabilisierungsgases in Abhängigkeit der wenigstens einen Motorgröße gesteuert oder geregelt wird.

Der Erfindung liegt also die Erkenntnis zugrunde, dass in vielen Fällen schon am Verbrennungsmotor vorhandene Sensoren zur Erfassung der Güte der Verbrennung verwendet werden können. Die Erfindung erlaubt es also, bei im Wesentlichen gleichbleibendem Aufwand für Messorgane, Stabilisierungsgas effizient und zielgerichtet einzusetzen.

Auch beim umgekehrten Fall, bei dem das Brenngas einen für den Verbrennungsmotor zu hohen Heizwert aufweist, kann mittels eines Stabilisierungsgases der stabile Betrieb sichergestellt werden. Indem hier ein Stabilisierungsgas mit einem niedrigeren Heizwert eingesetzt wird, kann erreicht werden, dass in der Brennkammer stets ein Gasgemisch vorliegt, welches einen für den Verbrennungsmotor akzeptablen Heizwert aufweist.

Darüber hinaus kann Stabilisierungsgas erfindungsgemäß auch dann eingesetzt werden, wenn andere Parameter des Brenngases nicht für den vorhandenen Verbrennungsmotor passend sind. Ein wichtiges Beispiel ist hier die Flammengeschwindigkeit. Das heißt, falls ein Brenngas mit zu niedriger (zu hoher) Flammengeschwindigkeit vorliegt, kann ein Stabilisierungsgas mit höherer (niedrigerer) Flammengeschwindigkeit beigemischt werden, um in Summe ein Gemisch mit der korrekten Flammengeschwindigkeit für den Verbrennungsmotor bereit zu stellen.

Falls mehrere Parameter des Brenngases nicht für den Verbrennungsmotor passend sind, können natürlich auch mehrere verschiedene Stabilisierungsgase verwendet werden, um das zu verbrennende Gas anzupassen.

Alle in Bezug auf den Stand der Technik diskutierten möglichen Anwendungen eines gattungsgemäßen Verbrennungsmotors oder eines gattungsgemäßen Verfahrens können auch bei einem erfindungsgemäßen Verbrennungsmotor bzw. Verfahren vorgesehen sein.

Weitere vorteilhafte Ausführungsformen der Erfindung sind in den abhängigen Ansprüchen definiert.

Bevorzugt kann die Erfindung bei Gasmotoren mit 8, 10, 12, 16, 18, 20, 22 oder 24 Zylindern zum Einsatz kommen.

Bevorzugt kommt die Erfindung bei, insbesondere fremdgezündeten, stationären Verbrennungsmotoren zum Einsatz, die bevorzugt mit einem elektrischen Generator zur Stromerzeugung gekoppelt sind oder zum direkten Antrieb von Maschinen, insbesondere Pumpen und Kompressoren, dienen.

Unter einer der wenigstens einen Brennkammer zugeführten Menge an Stabilisierungsgas, Brenngas oder Luft kann bevorzugt eine Stoffmenge der Gase verstanden werden. Grundsätzlich kann beispielsweise eine auf einem massenbasierten Mengenbegriff beruhende Größe zur Regelung oder Steuerung verwendet werden. Es ist aber beispielsweise auch möglich die Menge der Gase über deren chemischen Energieinhalt anzugeben.

Erfindungsgemäß kann eine Lambda-Sonde zur Messung eines Lambda-Werts (Luftüberschusszahl) als Motorgröße vorgesehen sein, welche mit der Steuer- oder Regeleinrichtung verbunden ist. Die Lambda-Sonde kann vorzugsweise im Abgastrakt angeordnet sein. Der gemessene Lambda-Wert wird dann erfindungsgemäß bei der Regelung oder der Steuerung der Zufuhr des Stabilisierungsgases verwendet, wobei die Menge des zugeführten Stabilisierungsgases erhöht wird, falls ein unterer Lambda-Grenzwert unterschritten wird.

Der Lambda-Wert kann ebenfalls im Einlassrohr über die Messung des Sauerstoffgehalts bestimmt und der Motorregelung zugeführt werden.

Alternativ oder Zusätzlich kann der Lambda-Wert mittels eines Sauerstoffsensors bestimmt werden, da aus den Messwerten des Sauerstoffsensors auf den Lambda-Wert rückgeschlossen werden kann. Natürlich können auch andere Sensoren verwendet werden, deren Messwerte die Bestimmung des Lambda-Werts erlauben. Als Beispiel wäre eine Kohlenmonoxid-Sonde zu nennen.

Erfindungsgemäß sind weiterhin Ausführungsformen, wobei der wenigstens ein Sensor zur Messung wenigstens eines Druckes eines in der wenigstens einen Brennkammer während einer Verbrennung befindlichen Gemisches aus Brenngas, Stabilisierungsgas und Luft als Motorgröße vorgesehen ist, welcher mit der Steuer- oder Regeleinrichtung verbunden ist. Aus dem so erfassten Zylinderdruck wird erfindungsgemäß eine Zeitgröße, welche für die Geschwindigkeit der Verbrennung des in der wenigstens einen Brennkammer befindlichen Gases charakteristisch ist, berechnet. Erfindungsgemäß wird die Zeitgröße bei der Steuerung oder der Regelung des Stabilisierungsgases berücksichtigt.

Überall wo in der vorliegenden Offenbarung von einem Drucksensor die Rede ist,
ist es ebenso denkbar
- einen Ionenstromsensor oder
- einen Sensor zur Erfassung der Temperatur in der wenigstens einen Brennkammer zu verwenden.

Mit den Messwerten dieser Sensoren lässt es sich ebenfalls auf den charakteristischen Verbrennungsverlauf rückschließen.

In einer besonders bevorzugten Ausführungsform der Erfindung ist genau ein Sensor - insbesondere Drucksensor - je Brennkammer vorgesehen. Auf diese Weise kann für jede Brennkammer eine individuelle Zeitgröße berechnet werden. In einer weiteren bevorzugten Ausführungsform kann vorgesehen sein, dass über diese Individualzeitgrößen gemittelt wird oder ein Median der Individualzeitgrößen berechnet wird, um die Genauigkeit der zu berechnenden Zeitgröße zu verbessern. Es ist aber auch denkbar, die Beimischungen des Stabilisierungsgases für jede Brennkammer einzeln zu steuern oder zu regeln.

Bei der Bestimmung der Zeitgröße und/oder der Individualzeitgröße kann auf den sogenannten "mass fraction burned" (MFB) zurückgegriffen werden. Für die Definition desselben sei auf die Sektionen 9.1 und 9.2, insbesondere 9.2.1 und 9.2.2, des Fachbuchs "Internal Combustion Engine Fundamentals" von Heywood (McGraw-Hill, 1988) verwiesen. Als Zeitgröße und/oder Individualzeitgröße kann ein Zeitpunkt verwendet werden, bei dem der MFB einen definierten Anteil seines Maximums erreicht. Für die vorliegende Erfindung bevorzugte Werte für diesen Anteil liegen zwischen 30 % und 80 %, insbesondere zwischen 40 % und 65 % und besonders bevorzugt bei 50 %. Die auf diese Weise erzeugte Zeitgröße und/oder Individualzeitgröße wird als MFB50 bezeichnet (bei einem Anteil von 50 %; bei anderen gewählten Anteilen analog).

Der Anteil kann auch zwischen 0 % und 10% liegen. Die Zeitgröße und/oder Individualzeitgröße wird dann als Zündverzug bezeichnet. Für die Definition desselben sei auf die Sektion 9.2.3 des Fachbuchs "Internal Combustion Engine Fundamentals" von Heywood (McGraw-Hill, 1988) verwiesen.

In einer besonders bevorzugten Ausführungsform der Erfindung kann vorgesehen sein, dass während der Verbrennung ein Druckverlauf in der wenigstens einen Brennkammer mittels des wenigstens einen Drucksensors gemessen wird und zur Berechnung der Zeitgröße verwendet wird. Dies kann vorzugsweise durch die Messung einer Vielzahl von Druckwerten durch den wenigstens einen Drucksensor geschehen. Je mehr Druckwerte pro Verbrennung vom wenigstens einen Drucksensor geliefert werden, d.h. je höher die zeitliche Auflösung des gemessenen Druckverlaufs ist, desto genauer kann die daraus ermittelte Zeitgröße berechnet werden.

Dies gilt insbesondere für die folgende Weiterbildung dieser Ausführung. Es kann vorgesehen sein, dass ein Heizverlauf als Differenz des Druckverlaufs und eines Schleppdruckverlaufs sowie ein kumulativer Heizverlauf als Integral des Heizverlaufs berechnet wird und der kumulative Heizverlauf zur Berechnung der Zeitgröße verwendet wird. Unter dem Schleppdruck ist ein Verlauf des Druckes in der Brennkammer ohne Verbrennung zu verstehen. Beispielsweise bei einer Kolben-Zylinder-Einheit ändert sich im geschleppten Betrieb der Druck periodisch, auch wenn keine Verbrennung stattfindet. Der Schleppdruckverlauf kann experimentell, mit einer Simulation oder durch eine analytische Berechnung bestimmt werden. Durch diese Ausführungsform ist es möglich, den genauen Brennverlauf in der Brennkammer zu erfassen.

Eine auf dem MFB beruhende Zeitgröße oder Individualzeitgröße kann aus dem Heizverlauf auf einfache Weise bestimmt werden, indem ein Zeitpunkt, bei dem der kumulativer Heizverlauf einen definierten Anteil seines Maximums erreicht, als Zeitgröße oder als Individualzeitgröße verwendet wird, wobei der Anteil zwischen 30 % und 80 %, bevorzugt zwischen 40 % und 65 % und besonders bevorzugt bei 50 %, liegt.

Alternativ oder zusätzlich kann auch ein Anteil zwischen 0 % und 20 % verwendet werden. In diesem Fall wird die Zeitgröße oder Individualzeitgröße als Zündverzug bezeichnet.

Die Verwendung des Zündverzugs kann von Vorteil sein, da zu Beginn der Verbrennung relativ (beispielsweise im Vergleich zum Zeitpunkt des Verbrennungsschwerpunkts) einfache Strömungsverhältnisse im Zylinder herrschen. Vorrausetzung dafür ist ein für den wenigstens einen Drucksensor genügend hohes Druckniveau am Beginn des Verbrennungsvorgangs.

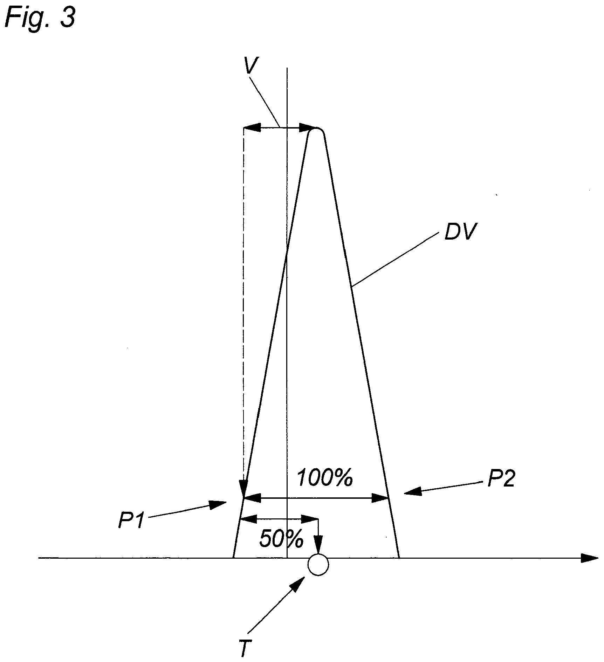

Die Zeitgröße kann aber auch auf andere Arten berechnet werden. Einige Beispiele seien angeführt:
- Maximum des differentiellen Heizgesetzes,
- Bestimmung des Flächenschwerpunkts des differentiellen Heizgesetzes,
- die Lage des Spitzenwerts des Zylinderdrucks (auf diese Weise kann sehr einfach ein Verbrennungsschwerpunkt bestimmt werden),
- Auswertung der Zylinderdruckflanken (auf dieses Verfahren wird in der Figurenbeschreibung kurz eingegangen, siehe Figur 3).

In einer besonders bevorzugten Ausführungsform der Erfindung kann es vorgesehen sein, sowohl eine Lambda-Sonde als auch wenigstens einen in der wenigstens einen Brennkammer angeordneten Drucksensor zu verwenden. Es ist jedoch auch denkbar, den Lambda-Wert aus Messwerten des wenigstens einen Drucksensors zu berechnen statt ihn mit einer Lambda-Sonde zu messen.

Es kann eine erste Mischeinrichtung zur Herstellung eines Vorgemisches aus Brenngas und Luft sowie eine mit der ersten Mischeinrichtung verbundene zweite Mischeinrichtung zur Herstellung eines Hauptgemisches aus dem Vorgemisch und Stabilisierungsgas vorgesehen sein, wobei das Hauptgemisch der wenigstens einen Brennkammer zuführbar ist.

In einer Stabilisierungsgaszuleitung zur Bereitstellung von Stabilisierungsgas kann ein mit der Steuer- oder Regeleinrichtung verbundenes Stellventil vorgesehen sein.

Weitere Vorteile und Einzelheiten der Erfindung sind anhand der Figuren sowie der dazugehörigen Figurenbeschreiben ersichtlich. Dabei zeigen:
- Fig. 1: eine schematische Darstellung eines erfindungsgemäßen Verbrennungsmotors,
- Fig. 2a und 2b: zwei Diagramme zur Ermittlung der Zeitgröße in einer ersten Ausführungsform,
- Fig. 3: ein Diagramm zur Ermittlung der Zeitgröße in einer zweiten Ausführungsform sowie
- Fig. 4: ein Regelungskonzept eines erfindungsgemäßen Verbrennungsmotors bzw. eines erfindungsgemäßen Verfahrens.

Der Verbrennungsmotor 1 verfügt über eine Zufuhr von Brenngas B sowie Stabilisierungsgas S. Das Brenngas B wird einer ersten Mischeinrichtung 7 über eine Brenngaszuleitung 11 zugeführt. Der ersten Mischeinrichtung 7 wird außerdem Luft L über die Luftzuleitung 12 zugeführt. Das in der ersten Mischeinrichtung 7 hergestellte Vorgemisch wird einer zweiten Mischeinrichtung 8 zugeführt. In der zweiten Mischeinrichtung 8 wird dem Vorgemisch über die Stabilisierungsgaszuleitung 9 Stabilisierungsgas S beigemischt, wodurch das Hauptgemisch entsteht, welches den Brennkammern 2 zugeführt wird. Rein exemplarisch sind zehn Brennkammern 2 dargestellt. Die Zahl der Brennkammern 2 hat jedoch für die Erfindung an sich keine Bewandtnis. Der Übersichtlichkeit halber sind nicht alle Brennkammern 2 und nicht alle Drucksensoren 3 mit Bezugszeichen versehen.

Vor allem bei Minen - oder Grubengas kann anders als dargestellt die Luftzuleitung 12 und die Zufuhr des Brenngases B vertauscht sein, sodass also das Brenngas B frei zuströmt und Luft über ein Stellventil 10 zudosiert wird.

In diesem Ausführungsbeispiel sind die Brennkammern als Kolben-ZylinderEinheiten ausgeführt. Ein Turbolader 16 ist vorgesehen. Es können auch mehrere Turbolader 16 vorhanden sein (nicht dargestellt).

Der Turbolader 16 verfügt verdichterseitig über ein Bypass-Ventil 17 und turbinenseitig über ein Waste-Gate 18. Mittels dieser kann der Ladedruck und die Ladeluftmenge schnell beeinflusst werden, wodurch die Leistungsabgabe des Verbrennungsmotors 1 und die Emissionen geregelt werden können.

In diesem Ausführungsbeispiel treibt der Verbrennungsmotor 1 einen Generator 5 zur Stromerzeugung an.

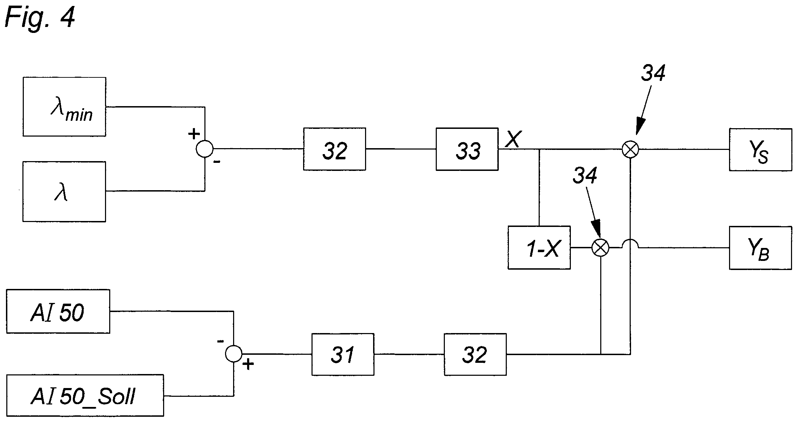

In der Abgasleitung 20 befindet sich eine mit der Regeleinrichtung 4 verbundene Lambda-Sonde 14. Für die Funktionsweise der Regeleinrichtung 4 sei auf Figur 4 verwiesen.

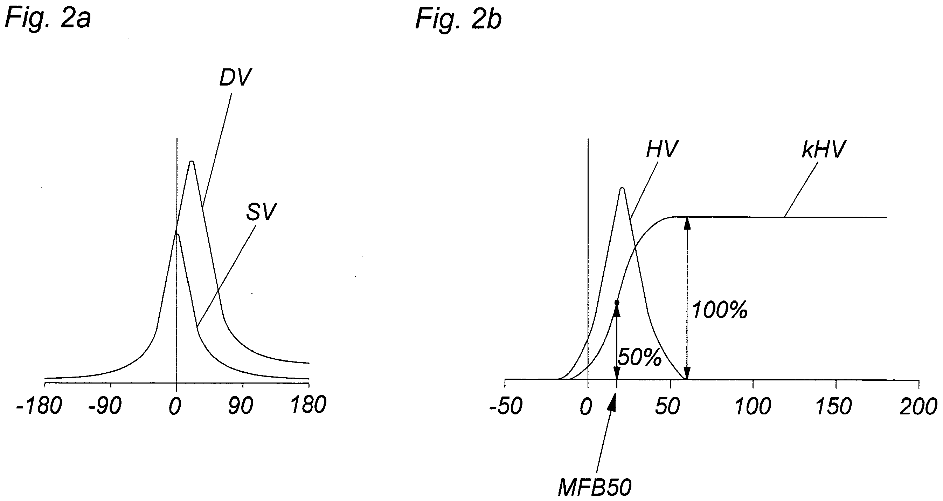

Es ist jeweils ein Drucksensor 3 für jede Brennkammer 2 vorgesehen, welche die Druckverläufe während der Verbrennung in den Brennkammern 2 messen. Die Messwerte werden der Regeleinrichtung 4 übermittelt, welche damit die Berechnung der Zeitgröße durchführt. Dies geschieht gemäß dem Verfahren, das mithilfe der Figuren 2a und 2b weiter unten beschrieben ist.

Neben den Messwerten der Lambda-Sonde 14 und der Drucksensoren 3 werden der Regeleinheit 4 die Messwerte des Ladedrucksensors 6, des Ladetemperatursensors 19 sowie eines Leistungssensors 15 am Generator 5 zugeführt. Die Regeleinrichtung 4 nimmt Einfluss auf die in der Brenngaszuleitung 12 sowie der Stabilisierungszuleitung 9 befindlichen Stellventile 10. Diese sind in diesem Ausführungsbeispiel als Volumenstromregelventile ausgeführt.

Alternativ zu der im vorigen Absatz beschriebenen Verwendung eines Ladetemperatursensors 19 kann auch ein Ladeluftmengensensor verwendet werden.

Die Regeleinrichtung 4 nimmt weiterhin auf die Drosselklappe 13, das verdichterseitige Bypass-Ventil 17 sowie das Waste-Gate 18 Einfluss.

Die Brennkammern und deren Zündeinrichtungen sind gemäß dem Stand der Technik auszuführen. Natürlich ist es möglich, die vorliegende Erfindung mit anderen bekannten Techniken zu kombinieren. Beispielsweise kann ohne Weiteres eine Abgasrückführung oder -reformierung durchgeführt werden.

In Figur 2a ist der von den Drucksensoren 3 gemessene Druckverlauf DV dargestellt. Als Zeiteinheit wird dabei die Position des jeweiligen Kolbens verwendet. Diese Position wird durch die Stellung der entsprechenden Kröpfung der Kurbelwelle angegeben, wobei 0° den oberen Totpunkt des Kolbens bezeichnet.

Figur 2a zeigt zudem den Schleppverlauf SV, also den Verlauf des Zylinderdruckes, der sich einstellt, wenn das Gas im Zylinder nicht entzündet wird. Der Schleppverlauf wurde in diesem Fall analytisch berechnet. Die Differenz von Druckverlauf DV und Schleppverlauf SV lässt sich der Heizverlauf HV berechnen, welcher in Figur 2b dargestellt ist. In dieser Figur ist außerdem der kumulative Heizverlauf kHV, welcher das Integral des Heizverlaufs HV ist, dargestellt. Die Stellung der Kurbelwelle, welche das Erreichen von 50 % des Maximums des kumulativen Heizverlaufs markiert, bezeichnet als MFB 50 (Mass Fraction Burned 50 %), wird als Zeitgröße verwendet.

Der Heizverlauf HW wird in der Fachliteratur beschrieben (Heywood, "Internal Combustion Engine Fundamentals", 1988, Seite 387ff).

Natürlich sind auch andere Prozentzahlen zur Definition der Zeitgröße geeignet.

Der MFB 50 wird auch als AI 50 (Angle Integrated 50 %) bezeichnet.

Figur 3 verdeutlicht eine weitere Ausführungsform zur Bestimmung der Zeitgröße aus dem Druckverlauf DV. Dabei wird das Maximum des Druckverlaufs bestimmt und der Punkt P1 ermittelt, welcher um einen Versatz V vor dem Druckmaximum auf der Kurve des Druckverlaufs DV liegt. Dann wird ein zweiter Punkt P2, welcher auf der rechten Flanke des Druckverlaufs DV liegt und den gleichen Druckwert wie P1 aufweist, bestimmt. In diesem Verfahren ist es möglich, die Punkte P1 und P2 durch gleitende Mittelwerte zu ermitteln, was die Genauigkeit erhöht.

Als Zeitgröße oder Individualgröße wird ein Wert zwischen den beiden Zeitkoordinaten der Punkte P1 und P2 verwendet, wobei meist eine Teilung von 50 % verwendet wird. Natürlich ist auch die Verwendung anderer Teilungen (40 % zu 60 %, 30 % zu 70 %) denkbar.

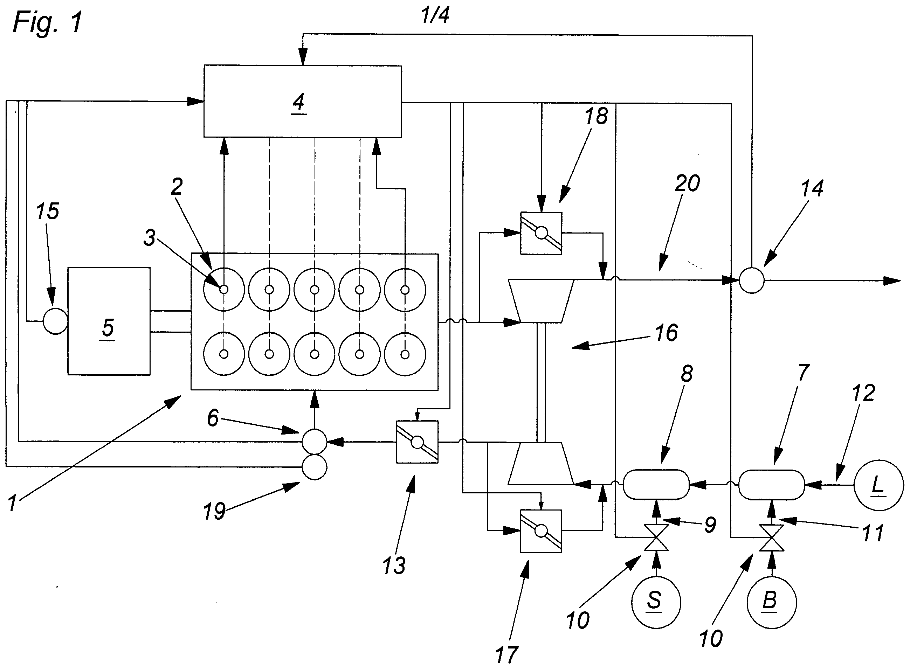

Im Folgenden wird die Regelung eines Verbrennungsmotors 1 gemäß der Ausführungsform aus Figur 1 erläutert. Anhand des Lambda-Werts λ oder auch direkt des Sauerstoffgehalts wird die benötigte Menge an Brenngas B und Stabilisierungsgas S über die Regeleinrichtung 4 eingestellt.

Die Regelung über die Lambdasonde 14 wird vorzugsweise mit der Regelung über die Verbrennungssensoren (z.B. Drucksensoren 3) kombiniert, um einen optimal stabilen und robusten Motorbetrieb zu gewährleisten.

Die Steuerung oder Regelung kann so ausgeführt werden, dass, falls die Zeitgröße über einem gewissen Grenzwert liegt, mehr Brenngas und Stabilisierungsgas (bei gleichbleibendem Verhältnis) zugeführt wird. Falls der Lambda-Wert λ nicht in einem akzeptablen Bereich liegt, wird das Verhältnis von Brenngas B zu Stabilisierungsgas S angepasst.

Die Regelung kann somit sicherstellen, dass der Verbrennungsmotor 1 immer mit Gas-Luft-Gemischen mit Lambda-Werten λ > 1,0 betrieben wird, was für einen stabilen Betrieb sowie für niedrige Emissionen und vernünftige Wirkungsgrade von Vorteil ist.

Ein entsprechendes Regelungskonzept ist in Figur 4 dargestellt.

In der Regeleinrichtung 4 ist ein Sollwert für den AI50 (bezeichnet als AI50_Soll) sowie ein minimaler Lambda-Wert λₘᵢₙ hinterlegt.

Der Messwert λ wird mit λₘᵢₙ verglichen und das Ergebnis wird einem Proportionalregler 31 zugeführt. (Im vorliegenden Ausführungsbeispiel ist λₘᵢₙ = 1,1.)

Die Verwendung eines Proportionalreglers 31 ist für die Erfindung nicht wesentlich. Es kann ebenfalls eine andere Reglerart oder ein Kennfeld verwendet werden.

Der vom Proportionalregler 31 produzierte Wert X, welcher das Verhältnis von Brenngas B zu Stabilisierungsgas S parametrisiert, wird dann von einem Saturierer 33 unterhalb einer vorgegebenen Saturationsgrenze Xₛₐₜ gehalten (zum Beispiel X <= 0,2). (X ist ein Wert zwischen 0 und 1 und ist definiert als das Verhältnis der Stoffmenge des Stabilisierungsgases S zur gesamten Stoffmenge von Stabilisierungsgas S und Brenngas B.) Das heißt, falls der Wert X größer als Xₛₐₜ ist, ersetzt der Saturierer 33 X durch Xₛₐₜ. Ähnlich wird vorgegangen, falls der Eingangswert für den Saturierer 33 negativ wird, das heißt der Saturierer 33 gibt bei negativen Eingangswerten X = 0 aus.

Erreicht der vom Proportionalregler 31 produzierte Wert X die Saturationsgrenze Xₛₐₜ (zB Xₛₐₜ = 0,2) dann wird zudem die Leistung des Verbrennungsmotors 1 proportional zur Abweichung X-Xₛₐₜ reduziert. Der an sich bekannte Leistungsregelkreis ist der Einfachheit halber nicht dargestellt.

Der Wert X dient als Grundlage für die Menge des zugeführten Stabilisierungsgases. 1-X dient als Grundlage für die Menge des zugeführten Brenngases.

Zum besseren Verständnis sei ein numerisches Beispiel gegeben. Falls der gemessene Lambda-Wert λ gleich dem minimalen Lambda-Wert λₘᵢₙ ist, also λ = λₘᵢₙ, wird dem Proportionalregler 31 der Wert 0 zugeführt, den dieser unverändert an den Saturierer 33 weitergibt. Da 0 innerhalb des erlaubten Wertebereichs des Saturierers 33 liegt, wird von diesem X=0 ausgegeben. Ändert sich nun die Gaszusammensetzung, sodass sich der gemessene Lambda-Wert auf λ = 1,0 ändert, ergibt der Vergleich zwischen λ und λₘᵢₙ den Wert 0,1. Für dieses numerische Beispiel sei die Konstante des entsprechenden Proportionalreglers 31 gleich 1. Der Saturierer 33 erhält also ebenfalls den Wert 0,1. Da 0,1 ebenfalls im erlaubten Wertebereich des Saturierers 33 liegt, gibt dieser X = 0,1 aus. Das heißt, dass in diesem Fall 10 % Stabilisierungsgas S (bezogen auf die Gesamtstoffmenge oder auch die Energieinhalte von Stabilisierungsgas S und Brenngas B) beigemischt.

AI50_Soll wird mit dem durch die Drucksensoren 3 ermittelten, tatsächlichen AI50 verglichen und einer Entscheidungseinheit 31 zugeführt. Die Entscheidungseinheit 31 stellt fest, ob die Abweichung zwischen tatsächlichem AI50 und AI50_Soll einen gewissen Grenzwert überschreitet (beispielsweise: | AI50 - AI50_Soll | >3°).

Falls dies der Fall ist, wird die Abweichung beispielsweise einem weiteren Proportionalregler 32 zugeführt und mit Hilfe des nach dem weiteren Porportionalregler 32 vorliegenden Resultats die Menge des Stabilisierungsgases S und des Brenngases B um den gleichen Faktor verändert. Dies geschieht im vorliegenden Ausführungsbeispiel durch Multiplikatoren 34.

Alternativ oder zusätzlich kann auch in das Verhältnis an Stabilisierungsgas S und Brenngas B eingegriffen werden. Das heißt, anders als im vorigen Absatz beschrieben, werden die Stoffmengen oder Energieinhalte an Gasen nicht um den gleichen Faktor verändert.

Als Ergebnis werden für die Stoffmenge des zuzuführenden Stabilisierungsgases Ys und des zuzuführenden Brenngases Y_{B} an die Stellventile 10 ausgegeben.

## Patentansprüche

1. Verbrennungsmotor mit
- wenigstens einer Brennkammer (2), welcher Luft (L), ein Brenngas (B) sowie ein Stabilisierungsgas (S) zuführbar sind,
- wenigstens einem Sensor (3, 14) zur Messung wenigstens einer Motorgröße (λ, p), wobei der wenigstens eine Sensor wenigstens einen, vorzugsweise als Drucksensor (3) ausgebildeten, Sensor zur Messung wenigstens eines Druckes eines während der Verbrennung in der wenigstens einen Brennkammer (2) befindlichen Gemisches aus Brenngas (B), Stabilisierungsgas (S) und Luft (L) als Motorgröße beinhaltet, sowie
- einer Steuer- oder Regeleinrichtung (4), welche mit dem wenigstens einen Sensor (3) verbunden ist und welche dazu ausgebildet ist, eine Menge des der wenigstens einen Brennkammer (2) zugeführten Stabilisierungsgases (S) mittels der Steuer- oder Regeleinrichtung (4) in Abhängigkeit der wenigstens einen Motorgröße (λ, p) zu steuern oder zu regeln,
**dadurch gekennzeichnet, dass** zusätzlich eine Lambda-Sonde (14) und/oder einen Sauerstoffsensor und/oder eine Kohlenmonoxid-Sonde zur Messung eines Lambda-Werts (λ) als Motorgröße vorhanden ist und dass die Steuer- oder Regeleinrichtung (4) dazu ausgebildet ist,
- eine Zeitgröße, welche für die Geschwindigkeit der Verbrennung des in der wenigstens einen Brennkammer (2) befindlichen Gases charakteristisch ist, aus den Messwerten des wenigstens einen Sensors zur Messung des wenigstens einen Druckes (p) des während der Verbrennung in der wenigstens einen Brennkammer (2) befindlichen Gemisches aus Brenngas (B), Stabilisierungsgas (S) und Luft (L) als Motorgröße zu berechnen und die Menge des der wenigstens einen Brennkammer (2) zugeführten Stabilisierungsgases (S) in Abhängigkeit der Zeitgröße zu steuern oder zu regeln sowie
- die Menge des zugeführten Stabilisierungsgases (S) zu erhöhen, falls ein unterer Lambda-Grenzwert (λₘᵢₙ) unterschritten wird.

2. Verbrennungsmotor nach Anspruch 1, **dadurch gekennzeichnet, dass** genau ein Sensor zur Messung des wenigstens einen Druckes des während der Verbrennung in der wenigstens einen Brennkammer (2) befindlichen Gemisches aus Brenngas (B), Stabilisierungsgas (S) und Luft (L) als Motorgröße je Brennkammer (2) vorgesehen ist.

3. Verfahren zum Betrieb eines Verbrennungsmotors, wobei
- wenigstens einer Brennkammer (2) Luft (L), ein Brenngas (B) sowie ein Stabilisierungsgas (S) zugeführt wird,
- in der wenigstens einen Brennkammer (2) befindliches Gas gezündet wird,
- mittels wenigstens eines Sensors (3,14) wenigstens eine Motorgröße (λ, p) am Verbrennungsmotor gemessen wird, wobei ein Sensor, vorzugsweise ein Drucksensor (3), zur Messung eines Drucks (p) als Motorgröße in der wenigstens einen Brennkammer (2) verwendet wird, und
- eine Menge des der wenigstens einen Brennkammer (2) zugeführten Stabilisierungsgases (S) in Abhängigkeit der wenigstens einen Motorgröße (λ, p) gesteuert oder geregelt wird,
**dadurch gekennzeichnet, dass**
- zusätzlich eine Lambda-Sonde und/oder ein Sauerstoffsensor und/oder eine Kohlenmonoxid-Sonde und als Motorgröße ein von der Lambda-Sonde (14) gemessener und/oder mittels Messwerten des Sauerstoffsensors bestimmter Lambda-Wert (λ) verwendet wird,
- eine Zeitgröße, welche für die Geschwindigkeit der Verbrennung des in der wenigstens einen Brennkammer (2) befindlichen Gemisches aus Brenngas (B), Stabilisierungsgas (S) und Luft (L) charakteristisch ist, aus dem wenigstens einen gemessenen Druck (p) berechnet wird und die Menge des der wenigstens einen Brennkammer (2) zugeführten Stabilisierungsgases (S) in Abhängigkeit der Zeitgröße gesteuert oder geregelt wird sowie
- die Menge des zugeführten Stabilisierungsgases (S) erhöht wird, falls ein unterer Lambda-Grenzwert (λₘᵢₙ) unterschritten wird.

4. Verfahren nach Anspruch 3, **dadurch gekennzeichnet, dass** die Menge des Stabilisierungsgases (S) und des Brenngases (B) in Abhängigkeit der Zeitgröße um einen gleichen Faktor verändert wird.

5. Verfahren nach Anspruch 3 oder 4 unter Verwendung eines Verbrennungsmotors (1) mit mehreren Brennkammern (2), **dadurch gekennzeichnet, dass** für jede Brennkammer (2) eine Individualzeitgröße (AI50, MFB50) berechnet wird und die Zeitgröße als Maximalwert, Minimalwert, Mittelwert oder Median der Individualzeitgrößen (AI50, MFB50) berechnet wird.

6. Verfahren nach einem der Ansprüche 3 bis 5, **dadurch gekennzeichnet, dass** während der Verbrennung ein Druckverlauf (DV) in der wenigstens einen Brennkammer (2) mittels des wenigstens einen Sensors gemessen wird und zur Berechnung der Zeitgröße verwendet wird.

7. Verfahren nach Anspruch 6, **dadurch gekennzeichnet, dass** ein Heizverlauf (HV) aus der Differenz des Druckverlaufs (DV) und eines Schleppdruckverlaufs (SV) sowie ein kumulativer Heizverlauf (kHV) als Integral des Heizverlaufs (HV) berechnet wird und der kumulative Heizverlauf (kHV) zur Berechnung der Zeitgröße und/oder der Individualzeitgröße (AI50, MFB50) verwendet wird.

8. Verfahren nach Anspruch 7, **dadurch gekennzeichnet, dass** ein Zeitpunkt, bei dem der kumulativer Heizverlauf (kHV) einen definierten Anteil seines Maximums erreicht, als Zeitgröße oder als Individualzeitgröße (AI50, MFB50) verwendet wird, wobei der Anteil zwischen 5 % und 20 % oder zwischen 30 % und 80 %, bevorzugt zwischen 40 % und 65 % und besonders bevorzugt bei 50 %, liegt.

9. Verfahren nach einem der Ansprüche 6 bis 8, vorzugsweise unter Verwendung des Anteils des kumulativen Heizverlaufs (kHV) von 50 %, wobei die Zeitgröße und/oder die Individualzeitgröße (AI50, MFB50) mittels einer Kolbenposition, ausgedrückt als eine Winkelstellung einer entsprechenden Kurbelwellenkröpfung, vom oberen Totpunkt in Drehrichtung der Kurbelwelle gemessen, angegeben wird, **dadurch gekennzeichnet, dass** die Menge des der wenigstens einen Brennkammer (2) zugeführten Stabilisierungsgases (S) auf einen Verbrennungsschwerpunktssollwert (AI50_Soll) gesteuert oder geregelt wird.

10. Verfahren nach Anspruch 9, **dadurch gekennzeichnet, dass** zur Berechnung der Zeitgröße und/oder der Individualzeitgröße (AI50, MFB50) ein erster auf dem Druckverlauf (DV) liegender Punkt (P1) und ein zweiter auf dem Druckverlauf (DV) liegender Punkt (P2) gewählt wird, wobei als Kriterium für die Wahl des ersten Punkts (P1) und/oder des zweiten Punkts (P2) ein Absolutwert des Druckverlaufs (DV) und/oder eine Steigung des Druckverlaufs (DV) verwendet wird, und dass für die der Zeitgröße und/oder für die Individualzeitgröße (AI50, MFB50) ein Wert zwischen Zeitkoordinaten des ersten Punktes (P1) und des zweiten Punktes (P2) bestimmt wird, wobei vorzugsweise eine Teilung von 50 % verwendet wird.

## Claims

1. Internal combustion engine, with
- at least one combustion chamber (2), to which air (L) a combustion gas (B) and a stabilizing gas (S) can be supplied,
- at least one sensor (3, 14) for measuring at least one engine variable (λ, p), wherein the at least one sensor includes at least one sensor, preferably realized as a pressure sensor (3), to measure, as an engine variable, at least one pressure of a mixture of combustion gas (B), stabilizing gas (S) and air (L) that is present in the at least one combustion chamber (2) during the combustion, as well as
- an open-loop or closed-loop control device (4), which is connected to the at least one sensor (3) and which is designed to control by open-loop or closed-loop control, by means of the open-loop or closed-loop control device (4) and in dependence on the at least one engine variable (λ, p), a quantity of stabilizing gas (S) supplied to the at least one combustion chamber (2),
characterized in that', in addition, a lambda probe (14) and/or an oxygen sensor and/or a carbon monoxide probe is provided to measure a lambda value (λ) as an engine variable and in that the open-loop or closed-loop control device (4) is designed
- to calculate from the measurement values of the at least one sensor for measuring the at least one pressure (p) of the mixture of combustion gas (B), stabilizing gas (S) and air (L) that is present in the at least one combustion chamber (2) during the combustion, as an engine variable, a time variable that is characteristic of the speed of combustion of the gas present in the at least one combustion chamber (2), and, in dependence of the at least one time variable, to control by an open-loop or closed-loop control the quantity of the stabilizing gas (S) supplied to the at least one combustion chamber (2), as well as
- to increase the quantity of the supplied stabilizing gas (S) if a lower lambda limit value (λₘᵢₙ) is undershot.

2. Internal combustion engine according to claim 1, **characterized in that** exactly one sensor per combustion chamber (2) is provided to measure, as an engine variable, the at least one pressure of the mixture of combustion gas (B), stabilizing gas (S) and air (L) that is present in the at least one combustion chamber (2) during the combustion.

3. Method for operating an internal combustion engine, wherein
- air (L), combustion gas (B) and stabilizing gas (S) are supplied to at least one combustion chamber (2),
- gas present in the at least one combustion chamber (2) is ignited,
- at least one engine variable (λ, p) is measured on the internal combustion engine by means of at least one sensor (3, 14), wherein a sensor, preferably a pressure sensor (3), is used for measuring a pressure (p) as an engine variable in the at least one combustion chamber (2), and
- a quantity of the stabilizing gas (S) supplied to the at least one combustion chamber (2) is controlled by open-loop or closed-loop control in dependence on the at least one engine variable (λ, p),
**characterized in that**
- in addition, a lambda probe and/or an oxygen sensor and/or a carbon monoxide probe and a lambda value (λ) measured from the lambda probe (14) and and/or determined by means of measurement values of the oxygen sensor is used as an engine variable,
- a time variable that is characteristic of the speed of combustion of the mixture of combustion gas (B), stabilizing gas (S) and air (L) that is present in the at least one combustion chamber (2) is calculated from the at least one measured pressure (p), and the quantity of the stabilizing gas (S) supplied to the at least one combustion chamber (2) is controlled by open-loop or closed-loop control in dependence on the time variable, as well as
- the quantity of the supplied stabilizing gas (S) is increased if a lower lambda limit value (λₘᵢₙ) is undershot.

4. Method according to claim 3, **characterized in that** the quantity of the stabilizing gas (S) and of the combustion gas (B) is altered in dependence on the time variable, by the same factor.

5. Method according to claim 3 or 4 using an internal combustion engine (1) having a plurality of combustion chambers (2), **characterized in that** an individual time variable (AI50, MFB50) is calculated for each combustion chamber (2), and the time variable is calculated as a maximum value, minimum value, mean value or median of the individual time variables (AI50, MFB50).

6. Method according to one of claims 3 to 5, **characterized in that**, during the combustion, a pressure progression (DV) in the at least one combustion chamber (2) is measured by means of the at least one sensor, and used to calculate the time variable.

7. Method according to claim 6, **characterized in that** a heating progression (HV) is calculated from the difference of the pressure progression (DV) and a motored pressure progression (SV), and a cumulative heating progression (kHV) is calculated as an integral of the heating progression (HV), and the cumulative heating progression (kHV) is used to calculate the time variable and/or the individual time variable (AI50, MFB50).

8. Method according to claim 7, **characterized in that** an instant of time at which the cumulative heating progression (kHV) attains a defined proportion of its maximum is used as a time variable or as an individual time variable (AI50, MFB50), wherein the proportion is between 5% and 20%, or between 30% and 80%, preferably between 40% and 65%, and particularly preferably is 50%.

9. Method according to one of claims 6 to 8, preferably using the 50% proportion of the cumulative heating progression (kHV), wherein the time variable and/or the individual time variable (AI50, MFB50) is indicated by means of a piston position, expressed as an angular position of a corresponding crankshaft cranking, measured from the top dead centre in the direction of rotation of the crankshaft, **characterized in that** the quantity of the stabilizing gas (S) supplied to the at least one combustion chamber (2) is controlled, by open-loop or closed-loop control, to a reference value of a 50% mass fraction burned point (AI50_Soll).

10. Method according to claim 9, **characterized in that**, for the purpose of calculating the time variable and/or the individual time variable (AI50, MFB50), a first point (P1) located on the pressure progression (DV) and a second point (P2) located on the pressure progression (DV) are selected, wherein an absolute value of the pressure progression (DV) and/or a gradient of the pressure progression (DV) is used as a criterion for the selection of the first point (P1) and/or of the second point (P2), and **in that** a value between time coordinates of the first point (P1) and of the second point (P2) is determined for the time variable and/or for the individual time variable (AI50, MFB50), wherein a division of 50% is preferably used.

## Revendications

1. Moteur à combustion interne avec
- au moins une chambre de combustion (2), à laquelle de l'air (L), un gaz combustible (B) ainsi qu'un gaz de stabilisation (S) peuvent être amenés,
- au moins un capteur (3, 14) pour la mesure au moins d'une grandeur de moteur (λ, p), dans lequel l'au moins un capteur comporte au moins un capteur, de préférence réalisé en tant que capteur de pression (3), pour la mesure au moins d'une pression d'un mélange de gaz combustible (B), de gaz de stabilisation (S) et d'air (L) se trouvant dans l'au moins une chambre de combustion (2) pendant la combustion en tant que grandeur de moteur, ainsi que
- un dispositif de commande ou de régulation (4), lequel est relié à l'au moins un capteur (3) et lequel est réalisé pour commander ou pour réguler une quantité du gaz de stabilisation (S) amené à l'au moins une chambre de combustion (2) au moyen du dispositif de commande ou de régulation (4) en fonction de l'au moins une grandeur de moteur (λ, p),
**caractérisé en ce qu'**une sonde Lambda (14) et/ou un capteur d'oxygène et/ou une sonde de monoxyde de carbone est présent(e) en plus pour la mesure d'une valeur Lambda (λ) en tant que grandeur de moteur et que le dispositif de commande ou de régulation (4) est réalisé
- pour calculer une grandeur temporelle, laquelle est caractéristique de la vitesse de la combustion du gaz se trouvant dans l'au moins une chambre de combustion (2), à partir des valeurs de mesure de l'au moins un capteur pour la mesure de l'au moins une pression (p) du mélange de gaz combustible (B), de gaz de stabilisation (S) et d'air (L) se trouvant dans l'au moins une chambre de combustion (2) pendant la combustion en tant que grandeur de moteur et pour commander ou pour réguler la quantité du gaz de stabilisation (S) amené à l'au moins une chambre de combustion (2) en fonction de la grandeur temporelle ainsi que
- pour augmenter la quantité du gaz de stabilisation (S) amené, au cas où une valeur limite lambda inférieure (λₘᵢₙ) ne serait pas atteinte.

2. Moteur à combustion interne selon la revendication 1, **caractérisé en ce qu'**un seul capteur est prévu pour la mesure de l'au moins une pression du mélange de gaz combustible (B), de gaz de stabilisation (S) et d'air (L) se trouvant dans l'au moins une chambre de combustion (2) pendant la combustion en tant que grandeur de moteur par chambre de combustion (2).

3. Procédé pour le fonctionnement d'un moteur à combustion interne, dans lequel
- de l'air (L), un gaz combustible (B) ainsi qu'un gaz de stabilisation (S) sont amenés à au moins une chambre de combustion (2),
- le gaz se trouvant dans l'au moins une chambre de combustion (2) est allumé,
- au moins une grandeur de moteur (λ, p) est mesurée sur le moteur à combustion interne au moyen d'au moins un capteur (3, 14), dans lequel un capteur, de préférence un capteur de pression (3), est utilisé pour la mesure d'une pression (p) en tant que grandeur de moteur dans l'au moins une chambre de combustion (2), et
- une quantité du gaz de stabilisation (S) amené à l'au moins une chambre de combustion (2) est commandée ou régulée en fonction de l'au moins une grandeur de moteur (λ, p),
**caractérisé en ce que**
- une sonde Lambda et/ou un capteur d'oxygène et/ou une sonde de monoxyde de carbone et en tant que grandeur de moteur une valeur lambda (λ) mesurée par la sonde Lambda (14) et/ou déterminée au moyen des valeurs de mesure du capteur d'oxygène est utilisé(e) en plus,
- une grandeur temporelle, laquelle est caractéristique de la vitesse de la combustion du mélange de gaz combustible (B), de gaz de stabilisation (S) et d'air (L) se trouvant dans l'au moins une chambre de combustion (2), est calculée à partir de l'au moins une pression (p) mesurée et la quantité du gaz de stabilisation (S) amené à l'au moins une chambre de combustion (2) est commandée ou régulée en fonction de la grandeur temporelle ainsi que
- la quantité du gaz de stabilisation (S) amené est augmentée au cas où une valeur limite lambda inférieure (λₘᵢₙ) ne serait pas atteinte.

4. Procédé selon la revendication 3, **caractérisé en ce que** la quantité du gaz de stabilisation (S) et du gaz combustible (B) est modifiée d'un même facteur en fonction de la grandeur temporelle.

5. Procédé selon la revendication 3 ou 4 faisant appel à un moteur à combustion interne (1) avec plusieurs chambres de combustion (2), **caractérisé en ce qu'**une grandeur temporelle individuelle (AI50, MFB50) est calculée pour chaque chambre de combustion (2) et la grandeur temporelle est calculée en tant que valeur maximale, valeur minimale, valeur moyenne ou médiane des grandeurs temporelles individuelles (AI50, MFB50).

6. Procédé selon l'une quelconque des revendications 3 à 5, **caractérisé en ce que** pendant la combustion une variation de pression (DV) est mesurée dans l'au moins une chambre de combustion (2) au moyen de l'au moins un capteur et est utilisée pour le calcul de la grandeur temporelle.

7. Procédé selon la revendication 6, **caractérisé en ce qu'**une variation de chauffage (HV) est calculée à partir de la différence de la variation de pression (DV) et d'une variation de pression d'entraînement (SV) ainsi qu'une variation de chauffage cumulative (kHV) en tant qu'intégrale de la variation de chauffage (HV) et la variation de chauffage cumulative (kHV) est utilisée pour le calcul de la grandeur temporelle et/ou de la grandeur temporelle individuelle (AI50, MFB50).

8. Procédé selon la revendication 7, **caractérisé en ce qu'**un moment auquel la variation de chauffage cumulative (kHV) atteint un pourcentage défini de son maximum est utilisé en tant que grandeur temporelle ou en tant que grandeur temporelle individuelle (AI50, MFB50), dans lequel le pourcentage est compris entre 5 % et 20 % ou entre 30 % et 80 %, de préférence entre 40 % et 65 % et de manière particulièrement préférée est de 50 %.

9. Procédé selon l'une quelconque des revendications 6 à 8, de préférence faisant appel au pourcentage de la variation de chauffage cumulative (kHV) de 50 %, dans lequel la grandeur temporelle et/ou la grandeur temporelle individuelle (AI50, MFB50) est indiquée au moyen d'une position de piston, exprimée en tant que situation angulaire d'un coude de vilebrequin correspondant, mesurée à partir du point mort haut dans la direction de rotation du vilebrequin, **caractérisé en ce que** la quantité du gaz de stabilisation (S) amené à l'au moins une chambre de combustion (2) est commandée ou régulée sur une valeur de consigne de centre de gravité de combustion (AI50_Soll).

10. Procédé selon la revendication 9, **caractérisé en ce que** pour le calcul de la grandeur temporelle et/ou de la grandeur temporelle individuelle (AI50, MFB50) un premier point (P1) situé sur la variation de pression (DV) et un deuxième point (P2) situé sur la variation de pression (DV) est choisi, dans lequel une valeur absolue de la variation de pression (DV) et/ou une augmentation de la variation de pression (DV) est utilisée en tant que critère pour le choix du premier point (P1) et/ou du deuxième point (P2), et qu'une valeur entre les coordonnées temporelles du premier point (P1) et du deuxième point (P2) est déterminée pour la la grandeur temporelle et/ou pour la grandeur temporelle individuelle (AI50, MFB50), dans lequel de préférence une division de 50 % est utilisée.
